# FASCICULE DE BREVET EUROPEEN

(11) **EP 4 341 545 B1**
(45) Date de publication et mention de la délivrance du brevet: **09.04.2025**
(21) Numéro de dépôt: 22731732.8
(22) Date de dépôt: 13.05.2022
(51) Int. Cl.: F02K 1/72, F02K 1/82

(54) **INVERSEUR DE POUSSEE A GRILLES MOBILES, COMPRENANT UNE STRUCTURE ARRIERE DE SUPPORT DE GRILLES INTEGRANT UNE FONCTION ACOUSTIQUE**
SCHUBUMKEHRER MIT KASKADEN MOBILER SCHAUFELN MIT EINER HINTEREN STRUKTUR ZUR UNTERSTÜTZUNG DER KASKADEN VON SCHAUFELN UND MIT EINER AKUSTISCHEN FUNKTION
THRUST REVERSER WITH CASCADES OF MOBILE VANES, COMPRISING A REAR STRUCTURE SUPPORTING THE CASCADES OF VANES AND INCORPORATING AN ACOUSTIC FUNCTION

(30) Priorité: 17.05.2021 FR 2105116
(43) Date de publication de la demande: 27.03.2024
(73) Titulaire: Safran Nacelles, 76700 Gonfreville-l'Orcher (FR)
(72) Inventeur: BOILEAU, Patrick, 77550 MOISSY-CRAMAYEL (FR); CHANDELIER, Julien, 77550 MOISSY-CRAMAYEL (FR); JOURDAN, Fabien, 77550 MOISSY-CRAMAYEL (FR); WIERTEL, Philippe, 77550 MOISSY-CRAMAYEL (FR)
(74) Mandataire: Brevalex
(86) Numéro de dépôt international: PCT/FR2022/050920
(87) Numéro de publication internationale: WO 2022/243627

(56) Documents cités:
- FR-A1- 3 095 673
- US-A1- 2015 108 248
- US-A1- 2020 386 184

## Description

### Domaine technique

L'invention se rapporte au domaine des inverseurs de poussée pour ensemble propulsif d'aéronef et, plus particulièrement, aux inverseurs à grilles mobiles.

### État de la technique antérieure

Les inverseurs de poussée sont des dispositifs permettant de dévier vers l'avant le flux d'air traversant l'ensemble propulsif, de manière à raccourcir les distances d'atterrissage, et de limiter la sollicitation des freins sur les atterrisseurs.

Les inverseurs à grilles actuellement exploités dans le secteur aéronautique comprennent un cadre avant formant avec les grilles une partie fixe de l'inverseur destinée à être reliée à un carter de turbomachine.

Des développements techniques plus récents ont permis de mettre au point des inverseurs à grilles mobiles, tels que décrits par exemple dans les documents FR3095673A1,

FR2981989A1, FR2999239A1, FR3002785A1 et FR3073572A1.

Par rapport à un inverseur à grilles fixes conventionnel, la mobilité des grilles permet de réduire la longueur de la nacelle, et, par conséquent, de diminuer sa masse ainsi que la traînée qu'elle génère.

Les inverseurs à grilles mobiles connus de l'état de la technique antérieure ont déjà fait l'objet de plusieurs développements. Néanmoins, il subsiste un besoin d'amélioration de la fonction acoustique, qui reste une préoccupation constante et majeure dans le domaine aéronautique.

### Exposé de l'invention

Pour répondre à ce besoin, l'invention a tout d'abord pour objet un inverseur de poussée pour ensemble propulsif d'aéronef, présentant un axe central longitudinal et comprenant une structure fixe, au moins un capot et une pluralité de grilles de déviation, le capot et les grilles formant un système mobile en translation par rapport à la structure fixe selon l'axe central longitudinal, entre une position avancée de poussée directe et une position reculée d'inversion de poussée, le système mobile comprenant en outre au moins une structure arrière de support des grilles sur laquelle est fixée une extrémité arrière d'au moins plusieurs de la pluralité de grilles de déviation, ladite au moins une structure arrière de support de grilles s'étendant selon une direction circonférentielle de l'inverseur.

Selon l'invention, ladite au moins une structure arrière de support de grilles intègre un dispositif d'absorption acoustique comprenant un réseau de cellules ainsi qu'une peau de recouvrement des cellules, la peau comportant une première surface agencée en regard des cellules, et une seconde surface opposée à la première, délimitant radialement vers l'extérieur une partie d'une veine secondaire d'écoulement des gaz, en position avancée de poussée directe du système mobile.

L'invention prévoit avantageusement de fonctionnaliser la structure arrière de support des grilles, en lui conférant une fonction additionnelle acoustique, tout en procurant des performances aérodynamiques élevées grâce à la seconde surface de la peau acoustique délimitant une partie de la veine secondaire de l'ensemble propulsif.

L'invention prévoit de préférence au moins l'une des caractéristiques techniques optionnelles suivantes, prises isolément ou en combinaison.

De préférence, le capot est mobile en rotation autour d'un axe de pivot entre une position fermée de vol et une position ouverte de maintenance, ladite au moins une structure arrière de support de grilles comprenant un organe de liaison axial destiné à coopérer avec un organe de liaison axial complémentaire prévu sur une extrémité avant du capot, lorsque celui-ci est en position fermée de vol. Avec cette conception, la structure arrière intègre par conséquent une fonction supplémentaire, celle de la liaison axiale avec le capot lorsque ce dernier se trouve en position fermée de vol.

De préférence, ladite au moins une structure arrière de support de grilles comporte une âme s'étendant selon la direction circonférentielle de l'inverseur.

Selon un premier mode de réalisation préféré de l'invention, dans ladite au moins une structure arrière de support de grilles, le réseau de cellules est au moins partiellement défini par des parois de cellules réalisées d'une seule pièce avec l'âme de ladite au moins une structure arrière, de manière à former également des éléments raidisseurs de cette âme.

Selon un second mode de réalisation préféré de l'invention, dans ladite au moins une structure arrière de support de grilles, le réseau de cellules est au moins partiellement défini par des parois de cellules réalisées d'une seule pièce avec la peau, et logées dans au moins une cavité de l'âme.

Selon un troisième mode de réalisation préféré de l'invention, dans ladite au moins une structure arrière de support de grilles, le réseau de cellules est au moins partiellement défini par une ou plusieurs structures alvéolaires rapportées entre l'âme et la peau, dans au moins une cavité de l'âme.

Il est noté que ces trois modes de réalisation préférés sont combinables, sans sortir du cadre de l'invention.

De préférence, au moins une structure arrière de support de grilles comporte au moins l'un des éléments suivants, voire plusieurs d'entre eux :
- un organe de liaison avec un actionneur de l'inverseur ;
- un organe de liaison avec une piste de guidage en translation prévue sur le système mobile ; et
- un organe de centrage radial du système mobile.

De préférence, la structure fixe comporte un bord de déviation qui s'évase radialement vers l'extérieur en allant vers l'arrière, pour délimiter un écoulement d'air destiné à traverser les grilles lorsque le système mobile se trouve en position reculée d'inversion de poussée.

De préférence, la peau présente une extrémité axiale avant en regard ou au contact du bord de déviation de la structure fixe, lorsque le système mobile se trouve en position avancée de poussée directe. Cela permet avantageusement de limiter les fuites sur la veine secondaire, en position avancée de poussée directe du système mobile.

Enfin, l'invention a également pour objet un ensemble propulsif pour aéronef, comprenant une turbomachine et un inverseur tel que décrit ci-dessus.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée représenté en configuration de poussée directe ;
[Fig. 2] est une demi-vue schématique en coupe longitudinale de l'ensemble propulsif montré sur la figure 1, avec l'inverseur représenté en configuration d'inversion de poussée ;
[Fig. 3] est une vue éclatée en perspective d'une partie de la nacelle de l'ensemble propulsif montré sur les figures précédentes, montrant en particulier les éléments de l'inverseur de poussée ;
[Fig. 4] est une vue éclatée en perspective des structures arrière de support des grilles équipant l'inverseur montré sur la figure précédente, selon un premier mode de réalisation préféré de l'invention ;
[Fig. 5] est une vue axiale des structures arrière de support des grilles montrées sur la figure précédente ;
[Fig. 6] est une vue agrandie en perspective de l'âme de l'une des structures arrière de support des grilles montrées sur les figures 4 et 5 ;
[Fig. 7] est une demi-vue schématique en coupe longitudinale d'une partie arrière de l'ensemble propulsif montré sur la figure 1, plus détaillée, et toujours avec l'inverseur en configuration de poussée directe ;
[Fig. 8] est une demi-vue schématique en coupe longitudinale d'une partie arrière de l'ensemble propulsif montré sur la figure 2, plus détaillée, et toujours avec l'inverseur en configuration d'inversion de poussée ;
[Fig. 9] est une demi-vue en perspective coupée par un plan longitudinal, représentant une fonctionnalité additionnelle pour les structures arrière de support des grilles ;
[Fig. 10] est une demi-vue similaire à la précédente, représentant encore une autre fonctionnalité additionnelle pour les structures arrière de support des grilles ;
[Fig. 11] est une demi-vue partielle en coupe longitudinale, représentant encore une autre fonctionnalité additionnelle pour les structures arrière de support des grilles ;
[Fig. 12] est une demi-vue en perspective coupée par un plan longitudinal, représentant l'une des peaux acoustiques selon un second mode de réalisation préféré de l'inverseur ;
[Fig. 13] est une demi-vue en coupe longitudinale, représentant l'une des structures arrière de support de grilles selon un troisième mode de réalisation préféré de l'inverseur ; et
[Fig. 14] est une vue partielle en coupe transversale de l'une des structures arrière de support des grilles, selon une combinaison des premier et second modes de réalisation préférés de l'inverseur.

### Description détaillée de modes de réalisation

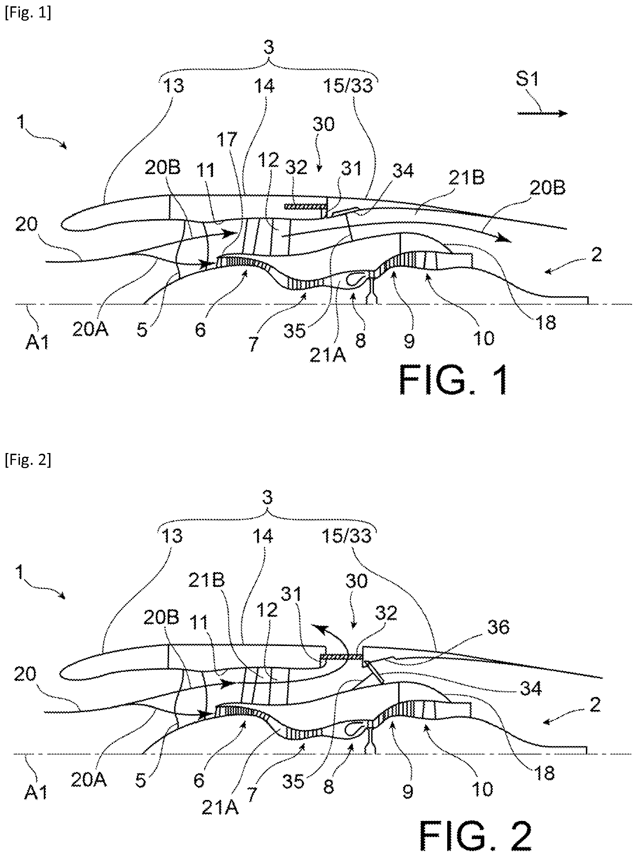

Il est représenté sur les figures 1 et 2 un ensemble propulsif 1 d'aéronef, présentant un axe central longitudinal A1.

Par la suite, les termes «avant» et « arrière » sont définis relativement à un sens général S1 d'écoulement des gaz à travers l'ensemble propulsif 1, le long de l'axe A1 lorsque celui-ci génère une poussée. Ces termes «avant» et «arrière» pourraient respectivement être substitués par les termes «amont» et «aval», avec la même signification.

L'ensemble propulsif 1 comprend une turbomachine 2, une nacelle 3 ainsi qu'un mât (non représenté), destiné à relier l'ensemble propulsif1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseur 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte des capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15.

Radialement vers l'extérieur, la veine secondaire 21B est délimitée par le carter de soufflante 11 et, dans la configuration de la figure 1, par des capots mobiles formant la section arrière 15 de la nacelle 3, qui seront décrits ultérieurement.

La nacelle 3 comprend un inverseur de poussée 30 comprenant d'une part une structure fixe 31 solidaire du carter de soufflante 11, et d'autre part une structure mobile par rapport à la structure fixe 31. Cette structure mobile de l'inverseur 30 comprend une pluralité de grilles de déviation 32, les capots mobiles 33 précités, et des volets d'obturation 34 et des biellettes 35.

La figure 1 montre l'inverseur 30 dans une configuration de poussée directe. Dans cette configuration, les capots mobiles 33 et l'ensemble du système mobile sont dans une position de fermeture, ou position avancée, dans laquelle les capots 33 sont en appui sur la structure fixe 31. Dans cette même position du système mobile, les grilles 32 sont logées dans un espace délimité radialement par le carter de soufflante 11 d'une part, et par les capots de soufflante 14 d'autre part. En configuration de poussée directe, les volets d'obturation 34 sont rétractés au sein d'une cavité 36 (voir figure 2) formée par les capots mobiles 33. L'inverseur 30 permet ainsi de canaliser le flux secondaire 20B vers l'arrière de l'ensemble propulsif 1, de manière à générer une poussée. Ainsi, sur la figure 1, les grilles 32 et les capots mobiles 33, qui sont solidaires axialement les uns des autres, sont dans une position avancée dite de poussée directe.

La figure 2 montre le même inverseur 30 dans une configuration d'inversion de poussée. Dans cette configuration, les capots mobiles 33 et l'ensemble du système mobile sont dans une position d'ouverture, ou position reculée, dans laquelle les capots 33 sont longitudinalement éloignés de la structure fixe 31 de manière à définir une ouverture radiale de la veine secondaire 21B. Les grilles 32 s'étendent à travers cette ouverture radiale. Dans cette configuration d'inversion de poussée, les volets d'obturation 34 sont déployés radialement dans la veine secondaire 21B de manière à diriger le flux secondaire 20B vers les grilles 32, lesquelles permettent d'orienter le flux ainsi redirigé vers l'avant de l'ensemble propulsif 1, dans le but de générer une contre-poussée. Ainsi, sur la figure 2, les grilles 32 et les capots mobiles 33 du système mobile sont représentés dans une position reculée dite d'inversion de poussée.

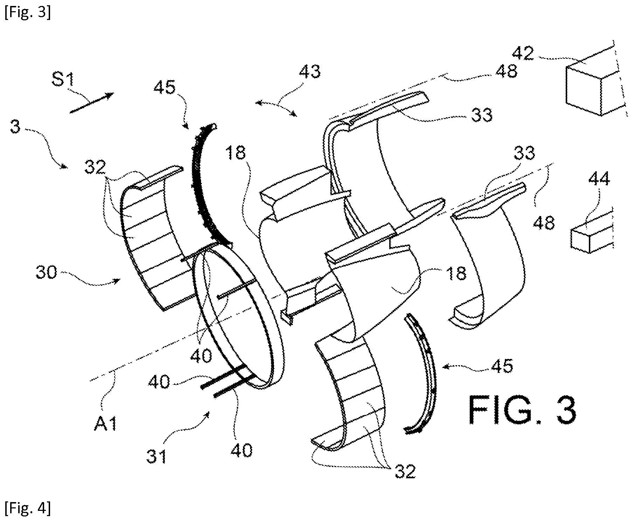

La figure 3 représente une vue éclatée en perspective de certains éléments de la nacelle 3, parmi lesquels une partie de la structure fixe 31 de l'inverseur 30, qui présente une forme générale annulaire centrée sur l'axe A1. Plus précisément, dans ce premier mode de réalisation préféré de l'invention, la structure fixe 31 dispose d'une forme de courbe fermée définissant une forme générale d'anneau, suivant localement le contour extérieur de la veine secondaire 21b selon la direction circonférentielle de la nacelle 43, en rapport à l'axe A1. La structure fixe 31 est également dénommée «cadre fixe» de l'inverseur.

Dans ce premier mode de réalisation préféré de l'invention, la structure fixe 31 est équipée d'éléments de guidage des grilles 32 lors de leur déplacement entre les positions avancée et reculée, ces éléments comprenant des rails axiaux 40. Par exemple, ce sont deux rails 40 solidaires d'une partie supérieure de l'anneau, et deux autres rails 40 solidaires d'une partie inférieure de ce même anneau. Ici, les rails 40 sont fixés à la structure fixe 31 par leur extrémité arrière, tandis que leur extrémité avant est fixée à un autre carter (non représenté sur la figure 3). Les rails 40 assurent ainsi une fonction de guidage des grilles 32 lors du déplacement axial de celles-ci, mais également, en configuration d'inversion de poussée, une fonction de reprise d'efforts aérodynamiques, principalement radiaux et tangentiels.

La figure 3 représente schématiquement les grilles 32, qui se succèdent selon la direction circonférentielle 43. Ici, elles sont regroupées en deux ensembles latéraux comprenant chacun plusieurs grilles 32, et s'étendant chacun sur un secteur angulaire proche de 180. Les deux ensembles latéraux de grilles 32 sont préférentiellement écartés latéralement l'un de l'autre au niveau de leurs extrémités en regard deux à deux, pour ménager des espaces supérieur et inférieur respectivement dédiés au passage du mât 42 et d'une poutre longitudinale inférieure 44.

Cette configuration est particulièrement bien adaptée dans le cas d'une conception de nacelle dans laquelle les capots 18 du deuxième tronçon sont montés articulés, l'inverseur 30 présentant alors une architecture dite «en D», connue sous l'appellation anglo-saxonne «D-Duct». Néanmoins, l'étendue circonférentielle des ensembles de grilles 32 peut être aisément adaptée en fonction de la conception de l'inverseur et de la nacelle, pouvant par exemple adopter une architecture dite «en C», connue sous l'appellation anglo-saxonne «C-Duct», ou encore une architecture dite « en O », connue sous l'appellation anglo-saxonne «O-Duct».

De manière connue, la structure fixe 31 comporte des organes (non représentés) formant des butées radiales et/ou tangentielles et/ou axiales pour les grilles 32.

L'une des particularités de l'invention, qui sera détaillée ci-après, réside dans la conception particulière de deux structures arrière de support de grilles, référencées 45 et également dénommées «cadres arrière de grilles». Chacune des deux structures 45 s'étend circonférentiellement le long de son ensemble latéral de grilles 32 associé, selon un secteur angulaire identique ou similaire. L'extrémité arrière de chaque grille 32 est destinée à être fixée sur sa structure arrière associée 45, par des moyens de fixation conventionnels.

De manière analogue, des structures avant de support de grilles (non représentées) peuvent être prévues pour fixer l'extrémité avant des grilles.

Sur la figure 3, les éléments de la nacelle 3 sont complétés par les capots articulés 18, 33, permettant de conférer l'architecture «en D» à la nacelle. En particulier, il a été représenté schématiquement l'axe de pivot 48 associé à chaque capot 33, cet axe de pivot 48 étant parallèle ou sensiblement parallèle à l'axe A1, et permettant au capot 33 d'être mobile en rotation entre une position ouverte de maintenance et une position fermée de vol, représentée sur la figure 3.

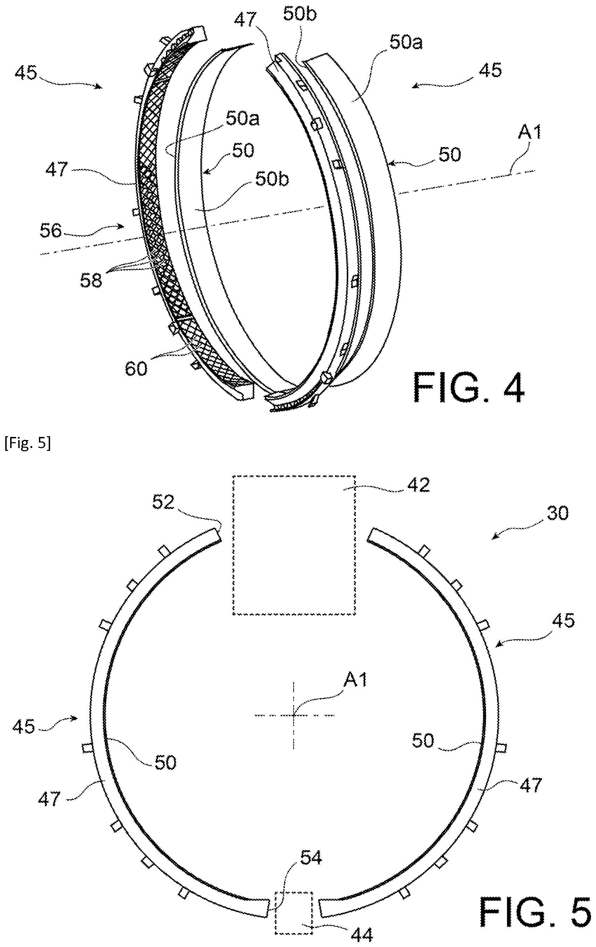

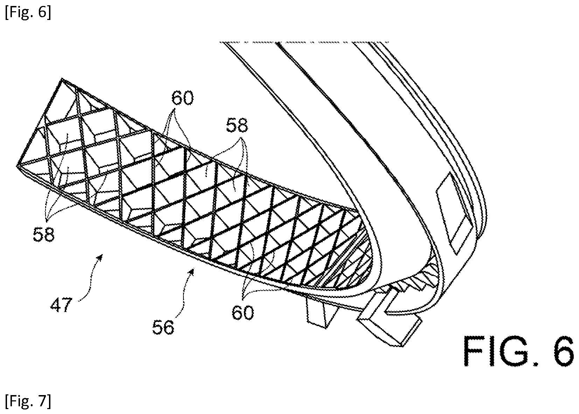

Les figures 4 à 8 représentent de manière plus détaillée la conception des deux structures arrière 45 dédiées au support des grilles 32, selon le premier mode de réalisation préféré de l'invention. De préférence, les deux structures arrière 45, droite et gauche, présentent une conception identique ou similaire, en étant symétriques par rapport à un plan vertical et longitudinal passant par l'axe A1. Par conséquent, par la suite, la description qui sera faite s'appliquera à chacune de ces deux structures arrière 45, dont l'une des particularités est d'intégrer une fonction acoustique afin de réduire l'intensité sonore se dégageant de l'ensemble propulsif.

Tout d'abord, chaque structure arrière 45 présente une conception en deux parties, la première partie correspondant à une partie principale structurale en forme d'âme 47, et la seconde partie correspondant à une peau 50, dite peau acoustique et recouvrant l'âme 47. L'âme 47 et la peau acoustique 50 sont superposées selon la direction radiale de l'inverseur, et elles s'étendent toutes les deux circonférentiellement sur un secteur angulaire identique ou similaire, correspondant à celui de la structure arrière 45 qu'elles composent, à savoir sur environ 180 ou sur une valeur légèrement inférieure.

Comme cela est le mieux visible sur la figure 5, les deux structures arrière 45 sont préférentiellement écartées latéralement l'une de l'autre au niveau de leurs extrémités en regard deux à deux, pour ménager des espaces supérieur 52 et inférieur 54 respectivement dédiés au passage du mât 42 et de la poutre longitudinale inférieure 44. Il est cependant noté que la géométrie et le nombre des structures arrière 45 peuvent être adaptés en fonction de la conception de la nacelle, présentant ici une architecture «en D».

Chaque structure arrière 45 intègre un dispositif d'absorption acoustique 56, formé par l'association d'un réseau de cellules 58 pratiquées au sein de l'âme 47, et de la peau acoustique 50 recouvrant radialement ces cellules 58. Chaque cellule 58, également dénommée alvéole, s'étend radialement ou sensiblement radialement, en étant définie dans l'épaisseur de l'âme 47 par des parois de cellules 60 réalisées d'une seule pièce avec cette âme. Par conséquent, ces parois de cellules 60, dites parois latérales de cellules, forment également des éléments raidisseurs de l'âme. Ils participent donc avantageusement à l'obtention d'une pièce 45 monobloc structurale, offrant un excellent compromis en matière de résistance mécanique et de masse.

Les parois latérales de cellules 60 sont préférentiellement obtenues en usinant l'âme 47 dans son épaisseur, cette âme étant préférentiellement métallique. Alternativement, une solution par moulage, par fabrication additive, ou encore toutes autre technique pourrait être envisagée, sans sortir du cadre de l'invention.

Chaque cellule 58 du réseau est donc définie latéralement par les parois 60, et présente radialement vers l'extérieur un fond fermé, de préférence également réalisé d'une seule pièce dans l'âme 47. A son extrémité radialement interne, chaque cellule 58 est recouverte par la peau 50, dont la première surface 50a radialement externe se trouve en regard des extrémités radialement internes des cellules 58. La première surface 50a de la peau 50 peut être au contact des parois de cellules 60, ou bien un faible jeu radial peut être retenu entre ces éléments 50a, 60, par exemple inférieur ou égal à 1 mm.

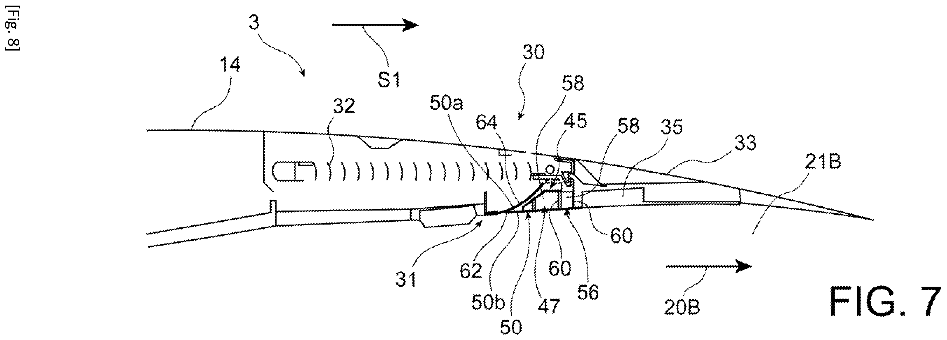

La seconde surface lisse 50b de la peau 50, opposée à la première surface 50a et donc orientée radialement vers l'intérieur en rapport à l'axe A1, délimite quant à elle une partie radialement extérieure de la veine secondaire 21b, lorsque le système mobile se trouve en position avancée de poussée directe telle que représentée sur la figure 7.

Les parois 60 définissent des cellules 58 de sections conventionnelles, par exemple carrées ou hexagonales. Du fait de la configuration en réseau, chaque paroi 60 participe à la délimitation de plusieurs cellules 58, de part et d'autres de celle-ci. A titre d'exemple indicatif, chaque cellule 58 présente une section dont les plus deux grandes dimensions sont chacune inférieures ou égales à 60 mm, voire à 50 mm, la section étant ici entendue comme une coupe dans un plan orthogonal à un axe fictif de cellule traversant son fond et son extrémité radialement interne fermée par la peau 50.

L'objectif réside dans la formation d'un dispositif d'absorption acoustique 56 du type comprenant un réseau de résonateurs de Helmholtz, grâce aux cellules acoustiques 58 formant ces résonateurs. Ainsi, la peau acoustique 50 présente la porosité requise pour laisser passer les ondes provenant du flux secondaire 20b en direction de l'intérieur des cellules 58, et permettre l'obtention de la fonction de résonateur. A titre d'exemple, la peau 50 est réalisée en matériau composite, et elle présente une conception identique ou similaire à celle de peaux acoustiques déjà connues pour équiper d'autres parties de la nacelle 3, comme l'entrée d'air.

Selon la direction axiale, la peau acoustique 50 s'étend tout le long de l'âme 47, et son extrémité axiale avant 62 peut être prolongée vers l'avant pour venir en regard ou au contact d'un bord de déviation 64 de la structure fixe 31, lorsque le système mobile adopte sa position avancée de poussée directe représentée sur la figure 7. Dans cette position, l'absence de jeu ou le faible jeu permet de maintenir au mieux le flux secondaire 20b dans la veine secondaire 21B, en limitant les fuites d'air au niveau de l'interface entre le système mobile et la partie fixe 31 de l'inverseur.

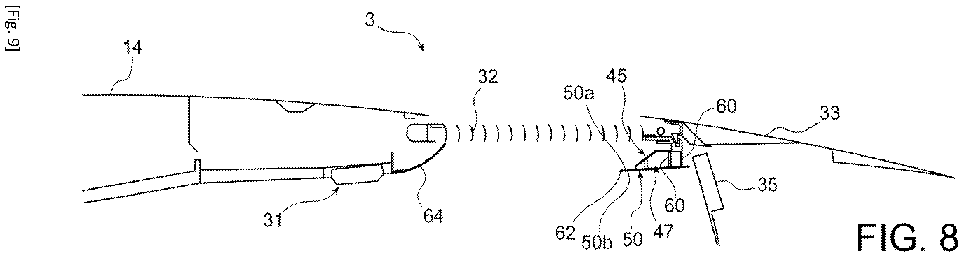

Le bord de déviation 64 avec lequel coopère la peau 50 présente une forme qui s'évase radialement vers l'extérieur en allant vers l'arrière, pour délimiter un écoulement d'air destiné à traverser les grilles 32 lorsque le système mobile se trouve en position reculée d'inversion de poussée représentée sur la figure 8. En d'autres termes, le bord de déviation 64 s'éloigne progressivement de l'axe A1 en allant de l'avant vers l'arrière, pour guider / dévier l'air vers les grilles 32 en configuration d'inversion de poussée.

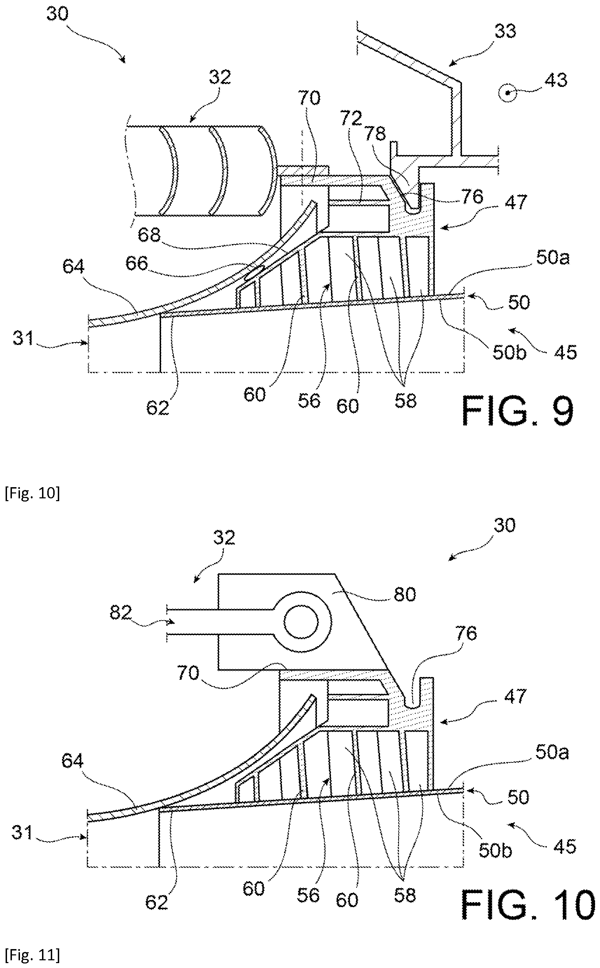

Pour limiter encore davantage les fuites sur le flux secondaire 20B, un joint d'étanchéité 66 peut être agencé entre l'âme 47 et le bord de déviation 64, comme cela a été schématisé sur la figure 9. Le joint 66 peut être porté par l'âme 47 ou le bord de déviation 64, et il est préférentiellement en appui sur un plan incliné 68 de l'âme, présentant localement une orientation tangentielle ou sensiblement tangentielle par rapport au bord de déviation courbe 64.

Sur cette figure 9, il est montré la fixation de l'extrémité arrière des grilles 32, sur une plateforme 70 de l'âme 47 agencée radialement vers l'extérieur par rapport au réseau de cellules 58. D'ailleurs, il est montré des raidisseurs additionnels 72 agencés radialement entre le fond des cellules 58 et la plateforme circulaire 70 de fixation des grilles, ces raidisseurs additionnels 72 étant préférentiellement agencés axialement ou sensiblement axialement, au contraire des parois latérales de cellules 60 disposant d'une orientation radiale ou sensiblement radiale en rapport à l'axe A1.

La figure 9 montre une autre fonctionnalité de la structure arrière 45, qui consiste à réaliser la liaison axiale avec le capot 33, dans sa position fermée de vol. En effet, l'extrémité arrière de l'âme 47 comprend un organe de liaison axial 76 en forme de gorge annulaire ouverte radialement vers l'extérieur, coopérant avec un organe de liaison axial complémentaire 78 prévu sur une extrémité avant du capot 33. Cet organe 78 prend de préférence la forme d'une saillie radiale vers l'intérieur, logée dans la gorge 76 pour l'obtention de l'accouplement axial en position fermée du capot 33. Lors de l'ouverture de ce dernier vers sa position ouverte de maintenance, la saillie 78 s'extrait de la gorge 76.

Sur la figure 10, il est représenté une autre fonctionnalité attachée aux structures arrière 45, à savoir celle de prévoir sur l'âme 47 un ou plusieurs organes 80 de liaison avec un actionneur 82 de l'inverseur 30. Ces organes de liaison 80, préférentiellement réalisés d'une seule pièce avec le reste de l'âme 47, sont par exemple prévus en saillie radialement vers l'extérieur à partir de la plateforme 70. Ils permettent d'articuler l'extrémité arrière des actionneurs 82 de l'inverseur, sous forme de vérins hydrauliques ou électriques assurant la translation du système mobile selon l'axe A1, relativement à la structure fixe 31.

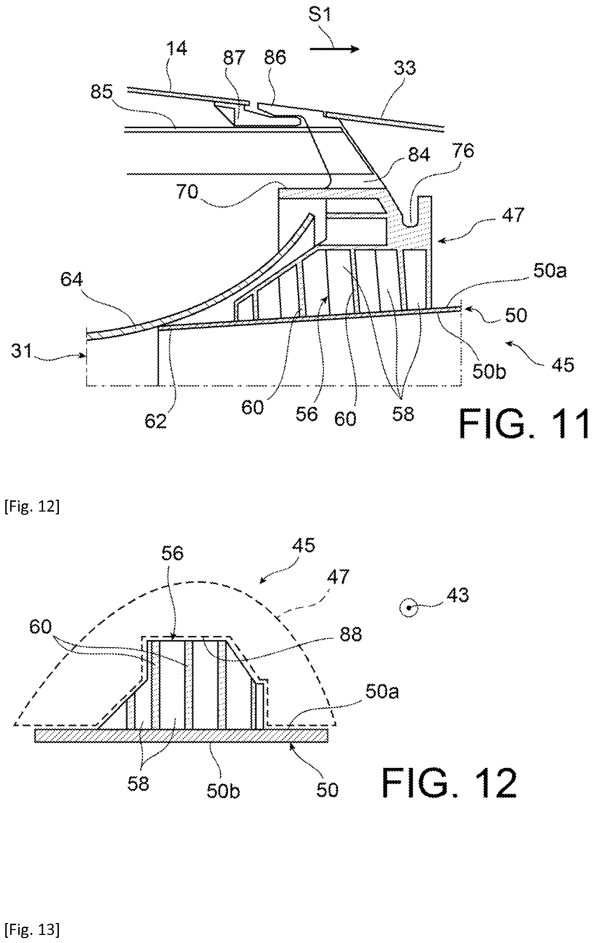

Encore une autre fonctionnalité des structures arrière 45 est représentée sur la figure 11, avec la présence d'un ou plusieurs organes 84 de liaison avec une ou plusieurs pistes de guidage en translation 85 prévues sur le système mobile, de préférence entre les grilles de déviation ou radialement au-dessus de celles-ci. Ces organes de liaison 84 sont eux aussi préférentiellement en saillie radialement vers l'extérieur à partir de la plateforme 70, et également préférentiellement réalisés d'une seule pièce avec le reste de l'âme 47.

Enfin, l'âme 47 peut être équipée d'un ou plusieurs organes de centrage radial 86 du système mobile, dont l'un des objectifs est de conférer la meilleure continuité aérodynamique possible entre les capots 14 et 33 se succédant selon la direction axiale. Les organes de centrage 86 peuvent par exemple être agencés aux extrémités radiales extérieures des organes de liaison 84, et coopérer avec des moyens complémentaires 87 prévus à l'extrémité arrière des capots 14, comme montré sur la figure 11.

La figure 12 représente un second mode de réalisation préféré de l'invention, dans lequel le réseau de cellules 58 n'est plus formé dans l'épaisseur de l'âme 47, mais défini par des parois de cellules 60 réalisées d'une seule pièce avec la peau 50, en saillie radialement vers l'intérieur à partir de la première surface 50a. Le réseau de cellules 58, intégré à la peau 50, se trouve alors logé dans une cavité 88 de l'âme 47, ouverte radialement vers l'intérieur et qui s'étend selon la direction circonférentielle 43.

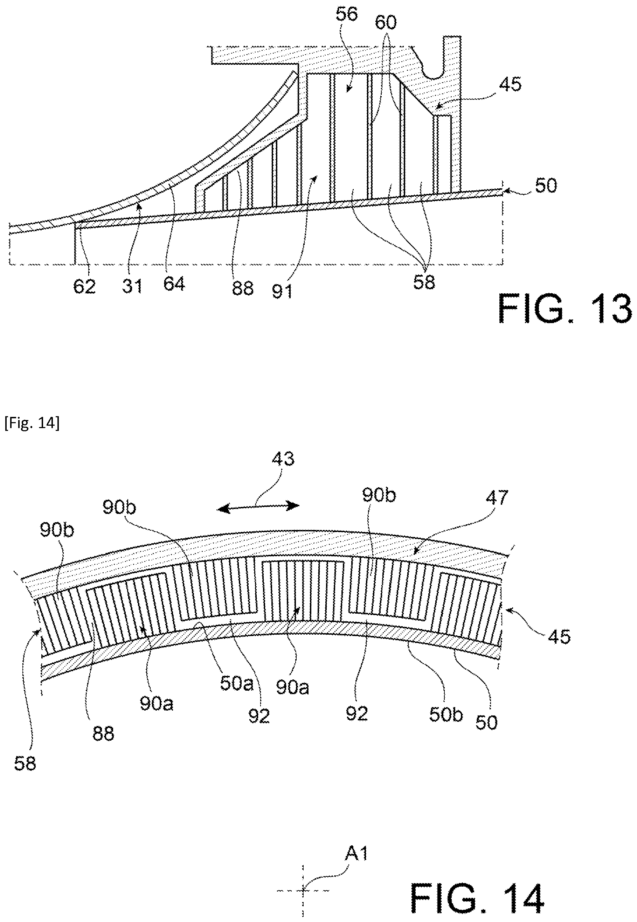

Selon un troisième mode de réalisation préféré représenté sur la figure 13, le réseau de cellules acoustiques 58 n'est plus solidaire de l'âme 47 ou encore de la peau 50, mais formé par une ou plusieurs structures alvéolaires 91 rapportées entre ces deux éléments 47, 50, dans une ou plusieurs cavités 88 prévues dans l'épaisseur de l'âme 47. Ces blocs ou structures alvéolaires 91, par exemple en nids-d'abeilles ou éléments similaires, sont ainsi enserrés radialement entre le fond des cavités 88 et la première surface 50a de la peau acoustique 50.

Enfin, la figure 14 représente une combinaison entre les premier et second modes de réalisation préférés décrits précédemment, dans laquelle la première surface 50a de la peau 50 porte plusieurs blocs 90a espacés circonférentiellement les uns des autres, et formant une partie du réseau de cellules 58. Chaque bloc 90a ou structure alvéolaire est logé dans une cavité 88 prévue dans l'épaisseur de l'âme 47. L'autre partie de ce réseau est formée par plusieurs blocs 90b espacés circonférentiellement les uns des autres et intégrés à l'âme 47, ces blocs 90b ou structures alvéolaires étant agencés dans les espaces libres 92 définis entre les blocs successifs 90a intégrés à la peau 50.

Bien entendu, diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ».

## Revendications

1. Inverseur de poussée (30) pour ensemble propulsif (1) d'aéronef, présentant un axe central longitudinal (A1) et comprenant une structure fixe (31), au moins un capot (33) et une pluralité de grilles de déviation (32), le capot (33) et les grilles (32) formant un système mobile en translation par rapport à la structure fixe (31) selon l'axe central longitudinal (A1), entre une position avancée de poussée directe et une position reculée d'inversion de poussée, le système mobile comprenant en outre au moins une structure arrière de support des grilles (45) sur laquelle est fixée une extrémité arrière d'au moins plusieurs de la pluralité de grilles de déviation (32), ladite au moins une structure arrière de support de grilles (45) s'étendant selon une direction circonférentielle (43) de l'inverseur,
**caractérisé en ce que** ladite au moins une structure arrière de support de grilles (45) intègre un dispositif d'absorption acoustique (56) comprenant un réseau de cellules (58) ainsi qu'une peau (50) de recouvrement des cellules, la peau comportant une première surface (50a) agencée en regard des cellules (58), et une seconde surface (50b) opposée à la première, délimitant radialement vers l'extérieur une partie d'une veine secondaire d'écoulement des gaz (21B), en position avancée de poussée directe du système mobile.

2. Inverseur selon la revendication 1, **caractérisé en ce que** le capot (33) est mobile en rotation autour d'un axe de pivot (48) entre une position fermée de vol et une position ouverte de maintenance, ladite au moins une structure arrière de support de grilles (45) comprenant un organe de liaison axial (76) destiné à coopérer avec un organe de liaison axial complémentaire (78) prévu sur une extrémité avant du capot (33), lorsque celui-ci est en position fermée de vol.

3. Inverseur selon la revendication 1 ou 2, **caractérisé en ce que** ladite au moins une structure arrière de support de grilles (45) comporte une âme (47) s'étendant selon la direction circonférentielle (45) de l'inverseur.

4. Inverseur selon la revendication 3, **caractérisé en ce que** dans ladite au moins une structure arrière de support de grilles (45), le réseau de cellules (58) est au moins partiellement défini par des parois de cellules (60) réalisées d'une seule pièce avec l'âme (47) de ladite au moins une structure arrière, de manière à former également des éléments raidisseurs de cette âme.

5. Inverseur selon la revendication 3 ou 4, **caractérisé en ce que** dans ladite au moins une structure arrière de support de grilles (45), le réseau de cellules (58) est au moins partiellement défini par des parois de cellules (60) réalisées d'une seule pièce avec la peau (50), et logées dans au moins une cavité (88) de l'âme (47).

6. Inverseur selon l'une quelconque des revendications 3 à 5, **caractérisé en ce que** dans ladite au moins une structure arrière de support de grilles (45), le réseau de cellules (58) est au moins partiellement défini par une ou plusieurs structures alvéolaires (91) rapportées entre l'âme (47) et la peau (50), dans au moins une cavité (88) de l'âme (47).

7. Inverseur selon l'une quelconque des revendications précédentes, **caractérisé en ce qu'**au moins une structure arrière de support de grilles (45) comporte au moins l'un des éléments suivants :
- un organe de liaison (80) avec un actionneur (82) de l'inverseur ;
- un organe de liaison (84) avec une piste (85) de guidage en translation prévue sur le système mobile ; et
- un organe de centrage radial (86) du système mobile.

8. Inverseur selon l'une quelconque des revendications précédentes, **caractérisé en ce que** la structure fixe (31) comporte un bord de déviation (64) qui s'évase radialement vers l'extérieur en allant vers l'arrière, pour délimiter un écoulement d'air destiné à traverser les grilles (32) lorsque le système mobile se trouve en position reculée d'inversion de poussée.

9. Inverseur selon la revendication 8, **caractérisé en ce que** la peau (50) présente une extrémité axiale avant (62) en regard ou au contact du bord de déviation (64) de la structure fixe (31), lorsque le système mobile se trouve en position avancée de poussée directe.

10. Ensemble propulsif (1) pour aéronef, comprenant une turbomachine (2) et un inverseur (30) selon l'une quelconque des revendications précédentes.

## Patentansprüche

1. Schubumkehrvorrichtung (30) für eine Flugzeugantriebseinheit (1), die eine Längsmittelachse (A1) und eine feste Struktur (31), mindestens eine Abdeckung (33) und eine Vielzahl von Umlenkgittern (32) umfasst, wobei die Abdeckung (33) und die Gitter (32) ein System bilden, das in Bezug auf die feste Struktur (31) entlang der Längsmittelachse (A1) zwischen einer vorgeschobenen Direktschubposition und einer zurückgezogenen Schubumkehrposition translatorisch beweglich ist, wobei das bewegliche System ferner mindestens eine hintere Gitterträgerstruktur (45) umfasst, an der ein hinteres Ende von mindestens mehreren der Vielzahl von Umlenkgittern (32) befestigt ist, wobei sich die mindestens eine hintere Gitterträgerstruktur (45) in einer Umfangsrichtung (43) der Umkehrvorrichtung erstreckt,
**dadurch gekennzeichnet, dass** die mindestens eine hintere Gitterträgerstruktur (45) eine Schallabsorptionsvorrichtung (56) beinhaltet, die eine Zellenanordnung (58) sowie eine Deckhaut (50) für die Zellen umfasst, wobei die Haut eine erste Fläche (50a), die gegenüber den Zellen (58) angeordnet ist, und eine zweite Fläche (50b) enthält, die der ersten gegenüberliegt und in der vorgeschobenen Direktschubposition des beweglichen Systems einen Teil eines sekundären Gasströmungskanals (21B) radial nach außen begrenzt.

2. Umkehrvorrichtung nach Anspruch 1, **dadurch gekennzeichnet, dass** die Abdeckung (33) um eine Schwenkachse (48) zwischen einer geschlossenen Flugposition und einer offenen Wartungsposition drehbeweglich ist, wobei die mindestens eine hintere Gitterträgerstruktur (45) ein axiales Verbindungselement (76) umfasst, das mit einem zusätzlichen axialen Verbindungselement (78) zusammenarbeiten soll, das an einem vorderen Ende der Abdeckung (33) vorgesehen ist, wenn sich diese in der geschlossenen Flugposition befindet.

3. Umkehrvorrichtung nach Anspruch 1 oder 2, **dadurch gekennzeichnet, dass** die mindestens eine hintere Gitterträgerstruktur (45) einen Kern (47) enthält, der sich in der Umfangsrichtung (45) der Umkehrvorrichtung erstreckt.

4. Umkehrvorrichtung nach Anspruch 3, **dadurch gekennzeichnet, dass** die Zellenanordnung (58) in der mindestens einen hinteren Gitterträgerstruktur (45) mindestens teilweise durch Zellwände (60) definiert ist, die aus einem Stück mit dem Kern (47) der mindestens einen hinteren Struktur hergestellt sind, um auch Versteifungselemente für den Kern zu bilden.

5. Umkehrvorrichtung nach Anspruch 3 oder 4, **dadurch gekennzeichnet, dass** die Zellenanordnung (58) in der mindestens einen hinteren Gitterträgerstruktur (45) mindestens teilweise durch Zellwände (60) definiert ist, die aus einem Stück mit der Haut (50) hergestellt sind und in mindestens einem Hohlraum (88) des Kerns (47) untergebracht sind.

6. Umkehrvorrichtung nach einem der Ansprüche 3 bis 5, **dadurch gekennzeichnet, dass** die Zellenanordnung (58) in der mindestens einen hinteren Gitterträgerstruktur (45) mindestens teilweise durch eine oder mehrere Wabenstrukturen (91) definiert ist, die zwischen dem Kern (47) und der Haut (50) in mindestens einem Hohlraum (88) des Kerns (47) angebracht sind.

7. Umkehrvorrichtung nach einem der vorhergehenden Ansprüche, **dadurch gekennzeichnet, dass** mindestens eine hintere Gitterträgerstruktur (45) mindestens eines der folgenden Elemente enthält:
- ein Verbindungselement (80) mit einem Stellglied (82) der Umkehrvorrichtung;
- ein Verbindungselement (84) mit einer am beweglichen System vorgesehenen Schiene (85) zur verschiebbaren Führung; und
- ein Radialzentrierelement (86) des beweglichen Systems.

8. Umkehrvorrichtung nach einem der vorhergehenden Ansprüche, **dadurch gekennzeichnet, dass** die feste Struktur (31) eine Umlenkkante (64) enthält, die sich radial nach außen aufweitet und nach hinten verläuft, um eine Luftströmung zu begrenzen, der durch die Gitter (32) strömen soll, wenn sich das bewegliche System in der zurückgezogenen Schubumkehrposition befindet.

9. Umkehrvorrichtung nach Anspruch 8, **dadurch gekennzeichnet, dass** die Haut (50) ein vorderes axiales Ende (62) gegenüber oder in Kontakt mit der Umlenkkante (64) der festen Struktur (31) aufweist, wenn sich das bewegliche System in der vorgeschobenen Direktschubposition befindet.

10. Antriebseinheit (1) für Flugzeuge, umfassend eine Turbomaschine (2) und eine Umkehrvorrichtung (30) nach einem der vorhergehenden Ansprüche.

## Claims

1. Thrust reverser (30) for an aircraft propulsion unit (1), having a longitudinal central axis (A1) and comprising a fixed structure (31), at least one cowl (33) and a plurality of diversion cascades (32), the cowl (33) and the cascades (32) forming a system able to move in translation with respect to the fixed structure (31) along the longitudinal central axis (A1), between an advanced direct-thrust position and a retracted thrust-reversal position, the movable system furthermore comprising at least one rear structure (45) for supporting the cascades on which a rear end of at least several of the plurality of diversion cascades (32) are secured, said at least one rear cascade support structure (45) extending in a circumferential direction (43) of the reverser,
**characterised in that** said at least one rear cascade-support structure (45) incorporates an acoustic absorption device (56) comprising a lattice of cells (58) and a skin (50) covering the cells, the skin including a first surface (50a) arranged facing the cells (58), and a second surface (50b) opposite to the first, radially delimiting towards the outside a part of a secondary gas-flow duct (21B), in the advanced direct-thrust position of the movable system.

2. Reverser according to claim 1, **characterised in that** the cowl (33) is able to move in rotation about a pivot axis (48) between a closed flight position and an open maintenance position, said at least one rear cascade-support structure (45) comprising an axial connection member (76) intended to cooperate with a complementary axial connection member (78) provided on a front end of the cowl (33), when the latter is in the closed flight position.

3. Reverser according to claim 1 or 2, **characterised in that** said at least one rear cascade-support structure (45) includes a core (47) extending in the circumferential direction (45) of the reverser.

4. Reverser according to claim 3, **characterised in that**, in said at least one rear cascade-support structure (45), the lattice of cells (58) is at least partially defined by cell walls (60) produced in a single piece with the core (47) of said at least one rear structure, so as also to form elements stiffening this core.

5. Reverser according to claim 3 or 4, **characterised in that**, in said at least one rear cascade-support structure (45), the lattice of cells (58) is at least partially defined by cell walls (60) produced in a single piece with the skin (50), and housed in at least one cavity (88) of the core (47).

6. Reverser according to any one of claims 3 to 5, **characterised in that**, in said at least one rear cascade-support structure (45), the lattice of cells (58) is at least partially defined by one or more cellular structures (91) attached between the core (47) and the skin (50), in at least one cavity (88) of the core (47).

7. Reverser according to any one of the preceding claims, **characterised in that** at least one rear cascade-support structure (45) includes at least one of the following elements:
- a member (80) connecting with an actuator (82) of the reverser;
- a member (84) connecting with a track (85) for guiding in translation provided on the movable system; and
- a member (86) for radial centring of the movable system.

8. Reverser according to any one of the preceding claims, **characterised in that** the fixed structure (31) includes a diversion edge (64) that splays radially outwards while going towards the rear, to delimit an airflow intended to pass through the cascades (32) when the movable system is in the retracted thrust-reversal position.

9. Reverser according to claim 8, **characterised in that** the skin (50) has a front axial end (62) facing or in contact with the diversion edge (64) of the fixed structure (31), when the movable system is in the advanced direct-thrust position.

10. Propulsion unit (1) for an aircraft, comprising a turbine engine (2) and a reverser (30) according to any one of the preceding claims.
